# EUROPEAN PATENT APPLICATION

(11) **EP 2 492 594 A1**
(43) Date of publication of application: **29.08.2012**
(21) Application number: 10824881.6
(22) Date of filing: 18.10.2010
(51) Int. Cl.: F23L 15/02, F23C 99/00, F23J 15/06, F23L 7/00, F27D 17/00

(54) **COMBUSTION FACILITY USING HEAT ACCUMULATION TYPE BURNERS AND COMBUSTION METHOD FOR HEAT ACCUMULATION TYPE BURNERS**

(30) Priority: 23.10.2009 JP 2009244381
(71) Applicant: IHI Corporation, Tokyo 135-8710 (JP)
(72) Inventor: MATSUURA Mitsunori, Tokyo 135-8710 (JP); TANAKA Tomoyuki, Tokyo 135-8710 (JP); FUJIMORI Toshiro, Tokyo 135-8710 (JP)
(74) Representative: Lamb, Martin John Carstairs
(86) International application number: PCT/JP2010/068250
(87) International publication number: WO 2011/049032

(57) **Abstract**

A combustion facility (1) using heat accumulation type burners, including: a furnace body (2): and a pair of burners (11A, 11B) provided in the furnace body and each including a heat accumulator (12A, 12B), wherein while the pair of burners are caused to alternately combust in the furnace, a combustion exhaust gas in the furnace is taken in by a burner in a state of non-combustion to accumulate heat in a heat accumulator of the burner, and a predetermined amount of combustion gas is supplied to a burner in a state of combustion (11A), so as to cool a heat accumulator (12B) of the burner and also preheats the combustion gas by heat released from the heat accumulator, the combustion facility further comprising a gas supply unit (31) that supplies a predetermined amount of combustion gas, and also a non-combustion gas which does not produce a disturbance in combustion, to the burner in the state of combustion, so as to cool the heat accumulator of the burner.

## Description

### TECHNICAL FIELD

The present invention relates to a combustion facility using heat accumulation type burners and a combustion method for heat accumulation type burners.
Priority is claimed on Japanese Patent Application No. 2009-244381, filed on October 23, 2009, the content of which is incorporated herein by reference.

### BACKGROUND ART

In heat accumulation type burners (regenerative burners) devised for saving energy for industrial furnaces, a pair of burners each having a heat accumulator are provided in side walls of a furnace or somewhere else. While one of the burners is combusting a mixture gas of a fuel gas and a combustion gas (combustion air) containing oxygen, a combustion exhaust gas is exhausted from the other of the burners through its heat accumulator, to thereby heat its heat accumulator. With frequent alternation between the states of the burners at an interval of several tens of seconds to several minutes, the combustion and the exhaustion of the combustion exhaust gas are performed alternately. As a result, the combustion gas is preheated when passing through the heat accumulators heated by the combustion exhaust gas. This allows for achievement of high recovery efficiency of exhaust heat, leading to energy saving. The combustion facilities using such heat accumulation type burners include, for example, a furnace installed with regenerative burners, which is described in Patent Document 1 below.

### PRIOR ART DOCUMENT

Patent Document 1: Japanese Patent Application, First Publication No. 2007-3036

In the aforementioned combustion facilities, it is impossible to feed the whole of the combustion exhaust gas generated in the furnace to the heat accumulators. This is because of the following reason. The amount of the produced combustion exhaust gas is greater than the amount of the supplied combustion gas. Because the whole of the heat accumulated in the heat accumulator by the combustion exhaust gas may not be released for preheating the combustion gas, the heat accumulator may suffer from an excessive rise in temperature, and hence may be burnt.
Conventionally, to avoid an excessive rise in temperature of a heat accumulator, approximately 20% of the total amount of the produced combustion exhaust gas is released, as it remains a high temperature, as an escape gas to the outside of the system without passing through the heat accumulator. However, the release of the escape gas is not favorable in terms of the recovery efficiency of exhaust heat and energy saving.
To reduce the amount of the released escape gas, there is a need to prevent an excessive rise in temperature of the heat accumulator. For example, conceivable methods include a method of operation with a time difference so that the combustion time (heat release time) is longer than the non-combustion time (heat accumulation time). However, this method is not available because it is not possible to achieve the mass balance.

### DISCLOSURE OF INVENTION

The present invention has been achieved in view of the above problems, and has an object to provide a combustion facility using heat accumulation type burners and a combustion method for the heat accumulation type burners, the facility and the method capable of reducing an amount of the released escape gas to achieve high recovery efficiency of exhaust heat and energy saving.

To solve the above problems, the present invention adopts the following.
(1) An aspect of the present invention is a combustion facility using heat accumulation type burners, including: a furnace body; and a pair of burners provided in the furnace body and each including a heat accumulator, wherein while the pair of burners are caused to alternately combust in the furnace, a combustion exhaust gas in the furnace is taken in by a burner in a state of non-combustion to accumulate heat in a heat accumulator of the burner, and a predetermined amount of combustion gas is supplied to a burner in a state of combustion, so as to cool a heat accumulator of the burner and also preheat the combustion gas by heat released from the heat accumulator, the combustion facility further including a gas supply unit that supplies the predetermined amount of combustion gas, and a non-combustion gas which does not produce a disturbance in combustion, to the burner in a state of combustion, so as to cool the heat accumulator of the burner.

(2) The combustion facility using heat accumulation type burners as described above in (1) may further include: an exhaust line that exhausts, to an outside of the furnace, a combustion exhaust gas remaining without being taken in by a burner in a state of non-combustion; a cooling/heat recovery unit that cools the combustion exhaust gas exhausted from the exhaust line and also recovers heat from the combustion exhaust gas; and a non-combustion gas supply unit that supplies the combustion exhaust gas after the heat recovery to the gas supply unit as the non-combustion gas.

(3) The combustion facility using heat accumulation type burners as described above in (1) may further include: an exhaust line that exhausts, to an outside of the furnace, a combustion exhaust gas remaining without being taken in by a burner in a state of non-combustion; a boiler that cools the combustion exhaust gas exhausted from the exhaust line and also recovers heat from the combustion exhaust gas, so as to produce water vapor; and a second non-combustion gas supply unit that supplies at least either one of the combustion exhaust gas after the heat recovery and the produced water vapor to the gas supply unit as the non-combustion gas.

(4) The combustion facility using heat accumulation type burners as described above in any one of (1) to (3) may further include: a third non-combustion gas supply unit that supplies an inert gas to the gas supply unit as the non-combustion gas.

(5) Another aspect of the present invention is a combustion method for heat accumulation type burners, including: a heat accumulation step in which, while a pair of burners each including a heat accumulator are caused to alternately combust in a furnace, the combustion exhaust gas in the furnace is taken in by a burner in a state of non-combustion to accumulate heat in a heat accumulator of the burner; a combustion gas preheat step in which a predetermined amount of the combustion gas is supplied to a burner in a state of combustion, so as to cool a heat accumulator of the burner and also in which the combustion gas is preheated by heat released from the heat accumulator; and a gas supply step in which the predetermined amount of combustion gas and a non-combustion gas, which does not produce a disturbance in combustion, are supplied to the burner in a state of combustion, so as to cool the heat accumulator of the burner.

(6) The combustion method for heat accumulation type burners as described above in (5) may further include: an exhaust step in which a combustion exhaust gas remaining without being taken in by the burner in a state of non-combustion is exhausted to an outside of the furnace; a cooling/heat recovery step in which the combustion exhaust gas exhausted in the exhaust step is cooled and is also subjected to heat recovery; and a non-combustion gas supply step in which the combustion exhaust gas after the heat recovery is supplied to the gas supply step as the non-combustion gas.

(7) The combustion method for heat accumulation type burners as described above in (5) may further include: an exhaust step in which a combustion exhaust gas remaining without being taken in by the burner in a state of non-combustion is exhausted to an outside of the furnace; a cooling/heat recovery step in which the combustion exhaust gas exhausted in the exhaust step is cooled and is also subjected to heat recovery, so as to produce water vapor; and a second non-combustion gas supply step in which at least either one of the combustion exhaust gas after the heat recovery and the produced water vapor is supplied to the gas supply step as the non-combustion gas.

(8) The combustion method for heat accumulation type burners as described above in any one of (5) to (7) may further include: a third non-combustion gas supply step in which an inert gas is supplied to the gas supply unit as the non-combustion gas.

### EFFECTS OF INVENTION

According to a combustion facility using heat accumulation type burners and a combustion method for heat accumulation type burners of the present invention, a gas supply unit and a gas supply step are included. Therefore, heat accumulators are cooled not only by a conventional predetermined amount of combustion gas but also by a non-combustion gas that does not contribute to combustion. As a result, a heat release amount of the heat accumulators are increased, to thereby prevent an excessive increase in temperature of the heat accumulators. With an increase in heat release amount of the heat accumulators, the heat accumulators are allowed to accumulate heat corresponding to the heat release amount. Therefore, it is possible to feed more combustion exhaust gas than conventional to the heat accumulators, leading to a decrease in the amount of the released escape gas. Furthermore, because the non-combustion gas does not contribute to combustion, an amount of the produced combustion exhaust gas is not increased more than an amount of the supplied non-combustion gas.
Therefore, according to the present invention, it is possible to reduce an amount of the released escape gas, to thereby achieve high recovery efficiency of exhaust heat and energy saving.

### BRIEF DESCRIPTION OF THE DRAWINGS

FIG. 1 is a diagram showing a configuration of a heating furnace using heat accumulation type burners according to an embodiment of the present invention.
FIG. 2 is a diagram showing the configuration of the heating furnace using the heat accumulation type burners according to the embodiment of the present invention.

### BEST MODE FOR CARRYING OUT THE INVENTION

Hereunder is a description of an embodiment of a combustion facility using heat accumulation type burners and a combustion method for heat accumulation type burners according to the present invention.

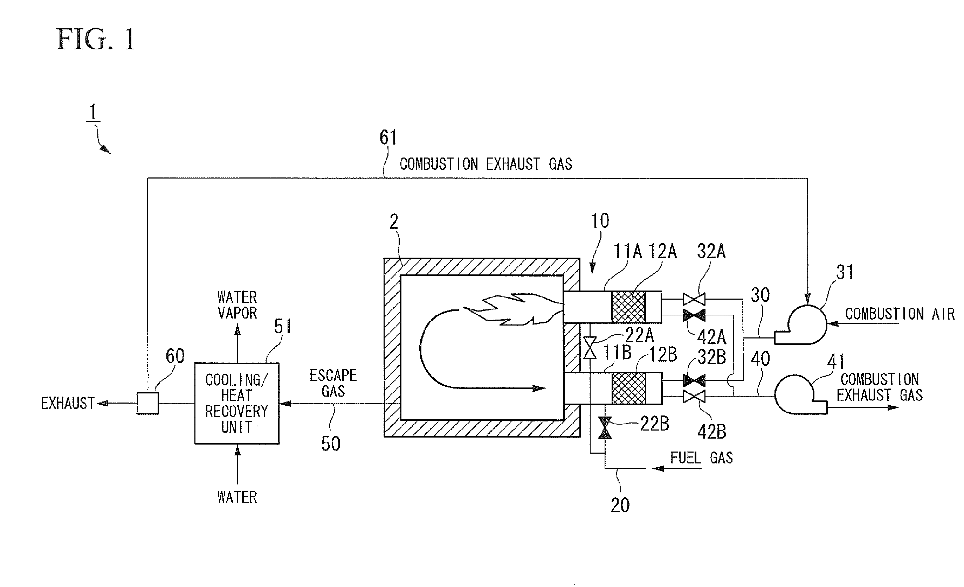

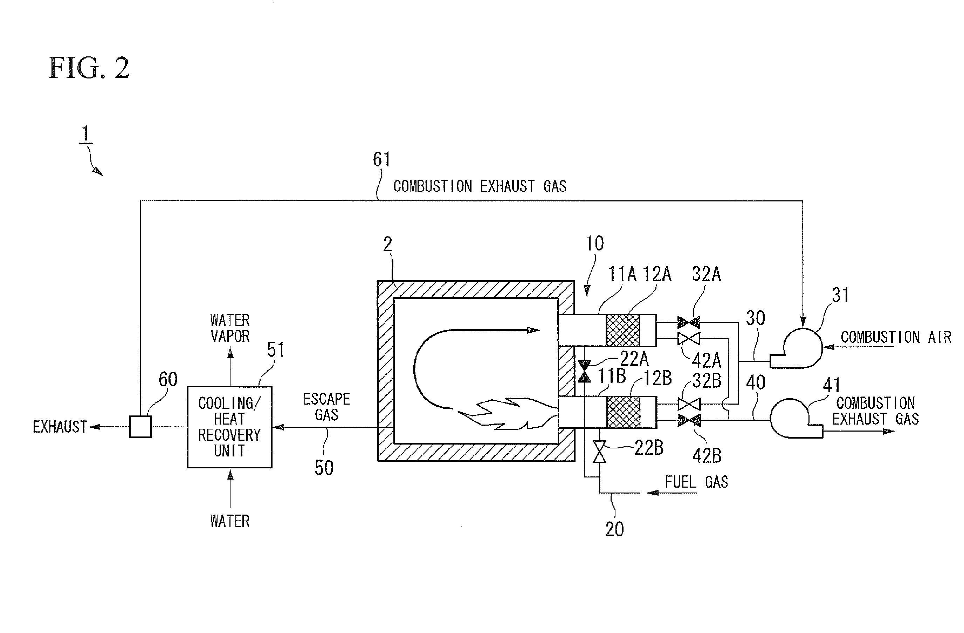

FIG. 1 and FIG. 2 are diagrams showing a configuration of a heating furnace 1 according to an embodiment of the present invention.
A heating furnace (a combustion facility using heat accumulation type burners) 1 has a furnace body 2. The furnace body 2 is surrounded by a furnace wall formed from a fire-resistant substance such as heat-resistant concrete. In the furnace body 2, a heat treatment target such as a steel material is arranged.
A pair of heat accumulation type burners 10 is protrude from the inside to the outside of the side wall of the furnace body 2. The heat accumulation type burners 10 include a pair of a burner 11A and a burner 11 B. In the heat accumulation type burners 10, the pair of the burner 11A and the burner 11B are caused to alternate combustion and intake (see FIG. 1 and FIG. 2). In the furnace, there are provided: a furnace pressure sensor for measuring the pressure in the furnace; and a furnace temperature sensor. Their measurement information is sent to a control unit (both of which are not shown in the figures). The control unit includes a computer system that comprehensively controls the operations of the constituent units provided in the heating furnace 1. The control unit controls the whole operation of the heating furnace 1.

The burner 11A is provided with a heat accumulator 12A. The burner 11B is provided with a heat accumulator 12B. As the heat accumulator 12A and the heat accumulator 12B, for example a type in which ceramic balls are filled, a type in which ceramic is made into a honey-comb shape, or another type may be adopted.
A first gas supply line 20 for supplying a fuel gas, and a second gas supply line 30 for supplying a combustion gas (a combustion air) and a non-combustion gas (a combustion exhaust gas) which will be described later, are connected to the burner 11A and the burner 11B. The first gas supply line 20 is connected to the burners 11A, 11B at positions closer to the furnace body 2 than the heat accumulators 12A, 12B. A combustion blower (a gas supply unit) 31 supplies a combustion gas and a non-combustion, gas to the second gas supply line 30 under a predetermined pressure. When the burner is in a state of combustion, a predetermined amount of combustion gas and a non-combustion gas, which does not produce disturbance in the combustion, are supplied from the combustion blower 31, to thereby make it possible to cool the heat accumulator of the burner. The second gas supply line 30 is arranged so that a gas pressed and fed by the combustion blower 31 is supplied to the burners 11A, 11B through the heat accumulators 12A, 12B, respectively.

In the first gas supply line 20, there are provided control valves 22A, 22B for switching the gas supply to the burner 11A or to the burner 11B. In the second gas supply line 30, there are provided control valves 32A, 32B for switching the gas supply by the combustion blower 31 to the burner 11A or to the burner 11B. With this construction, the burners 11A, 11B combust the supplied fuel gas mixed with a predetermined amount of combustion gas and also control the condition of combustion and the temperature in the furnace by means of an adjusted flow rate of the mixed gas.

Furthermore, an exhaust gas line 40 for taking in the combustion exhaust gas produced in the furnace and exhausting it to the outside of the furnace is connected to the burner 11A and the burner 11B. The exhaust gas line 40 is arranged so that the gas taken in by an exhaust fan 41 is released outside through the heat accumulators 12A, 12B. In the exhaust gas line 40, control valves 42A, 42B are provided, which switch the source of intake of the gas by the exhaust fan 41 from the burner 11A or from the burner 11B.

An escape gas line (an exhaust line) 50 is provided to the furnace body 2 for exhausting an escape gas (a part of the combustion exhaust gas in the furnace) to the outside of the furnace without passing through the burners 11A, 11B. In the escape gas line 50, a cooling/heat recovery unit 51 is provided for cooling the combustion exhaust gas that has been exhausted to the outside of the furnace as an escape gas and also for recovering heat. As the cooling/heat recovery unit 51 of the present embodiment, a type of a boiler is adopted in which heat is exchanged between the combustion exhaust gas and water to produce water vapor. As a type of the cooling/heat recovery unit 51, a known one such as a shell and tube heat exchanger or a plate-fin heat exchanger may be adopted.

On the downstream side of the position at which the cooling/heat recovery unit 51 of the escape gas line 50 is provided, a non-combustion gas supply unit 60 is provided that supplies part of the combustion exhaust gas after heat recovery to the combustion blower 31 via an escape gas return line 61 and also releases the remainder of the combustion exhaust gas to the outside. The non-combustion gas supply unit 60 includes: a pressure-feed device such as a blower; a flow rate control unit for controlling a returning flow rate of the combustion exhaust gas; pipes; and the like (all of which are not shown in the figures).

Next is a description of an operation of the heating furnace 1 with the aforementioned construction.
When a steel material such as iron and stainless steel is transferred into the furnace, the control valve 22A and the control valve 32A are opened based on an instruction from the control unit. Thereby put the burner 11 A in a state of combustion as shown in FIG. 1. At this time, the control valve 22B and the control valve 32B are closed.
When the inside of the furnace is heated by the burning of the burner 11A, the combustion exhaust gas is taken in by the burner 11B in a state of non-combustion. At this time, the control valve 42B is opened while the control valve 42A is closed. The combustion exhaust gas (at approximately 1200°C) taken in by the burner 11B is deprived of heat and cooled by passing through the heat accumulator 12B, and is then released to the outside. At this time, the heat accumulator 12B has its temperature raised from approximately 250°C to approximately 1200°C by the heat accumulation through the passage of the combustion exhaust gas (heat accumulation step).

After passage of a preset period of time (for example, 30 seconds), the combustion is switched from the burner 11A to the burner 11B based on an instruction from the control unit as shown in FIG. 2. The control valve 22A and the control valve 32A are closed while the control valve 22B and the control valve 32B are opened. In addition, the control valve 42B is closed, and the control valve 42A is opened. The combustion gas (at approximately 30°C) supplied to the burner 11B is preheated when passing through the heat accumulator 12B to a temperature close to that of the furnace (combustion gas preheat step). On the other hand, the heat accumulator 12B undergoes a decrease in temperature from approximately 1200°C to approximately 250°C through the heat released by the passage of the combustion gas. In the burner 11A, the combustion exhaust gas is taken in so as to accumulate heat in the heat accumulator 12A.
Through the repetition of such combustion cycle, the inside of the furnace is heated.

In the heating furnace 1, it is impossible to feed the whole of the combustion exhaust gas produced in the furnace to the heat accumulators 12A, 12B because the combustion cycle is repeated. Therefore, approximately 20% of the total amount of the produced combustion exhaust gas is exhausted, as it remains a high temperature (at approximately 1200°C), as an escape gas to the outside of the furnace via the escape gas line 50 without passing through the heat accumulators 12A, 12B (exhaust step).
The combustion exhaust gas exhausted to the outside of the furnace via the escape gas line 50 is introduced to the cooling/heat recovery unit 51. Water is supplied as a refrigerant to the cooling/heat recovery unit 51. Through the heat exchange between the combustion exhaust gas and the water, the combustion exhaust gas is cooled from approximately 1200°C to approximately 300°C (cooling/heat recovery step). The cooling/heat recovery unit 51 recovers the waste heat of the combustion exhaust gas as described above, to thereby produce water vapor. The water vapor produced in the cooling/heat recovery unit 51 is, for example, transferred to another heat treatment facility and used in the process of heat treatment.

The combustion exhaust gas after heat recovery in the cooling/heat recovery unit 51 is introduced to the non-combustion gas supply unit 60. The non-combustion gas supply unit 60 supplies part of the combustion exhaust gas after heat recovery to the combustion blower 31 via the escape gas return line 61 and also releases the remainder of the combustion exhaust gas after heat recovery to the outside (non-combustion gas supply step).
The combustion exhaust gas at a low temperature (approximately 300°C) that has been supplied to the combustion blower 31 via the escape gas return line 61 is supplied, together with a predetermined amount of combustion gas, by the combustion blower 31 to either of the burners 11A, 11B in a state of combustion.

In the case where the combustion exhaust gas is supplied to the burner 11A as shown in FIG. 1, the combustion exhaust gas together with the combustion gas cools the heat accumulator 12A (gas supply step). The combustion blower 31 supplies the combustion exhaust gas together with the combustion gas. This leads to an increase in the amount of the gas supplied to the heat accumulator 12A, resulting in improvement in cooling capability. Namely, in addition to a predetermined amount of combustion gas that contributes to combustion, a predetermined amount of low-temperature combustion exhaust gas that does not contribute to combustion is supplied to the heat accumulator 12A. This leads to an increase in the amount of heat released from the heat accumulator 12A, thus preventing an excessive increase in temperature of the heat accumulator 12A. The combustion exhaust gas preheated by passing through the heat accumulator 12A is blown into the furnace again. At this time, the combustion exhaust gas does not contribute to combustion, but contributes only to maintaining the temperature in the furnace. Furthermore, with the circulation of the combustion exhaust gas in this manner, it is possible to reduce the production of nitrogen oxides (NO_{X}) in the system.

In the case where the combustion is switched from the burner 11A to the burner 11B as shown in FIG. 2, the burner 11 A takes in the combustion exhaust gas to accumulate the heat in the heat accumulator 12A. Here, the amount of heat released from the heat accumulator 12A is increased by the amount of the supplied combustion exhaust gas. The heat accumulator 12A is capable of accumulating the amount of heat corresponding to the heat release amount. Therefore, it is possible to feed more combustion exhaust gas to the heat accumulator 12A. As a result, it is possible to reduce the amount of released escape gas. Furthermore, because the combustion exhaust gas does not contribute to combustion, the amount of the combustion exhaust gas produced in the furnace will not be increased more than the amount of supplied combustion exhaust gas, allowing for achievement of a mass balance in the system.

Consequently, according to the heating furnace 1 of the present embodiment, while a pair of burners 11A, 11B respectively including heat accumulators 12A, 12B are caused to alternately combust in the furnace, a combustion exhaust gas in the furnace is taken in from one burner in a state of non-combustion, to thereby accumulate heat in the heat accumulator of the burner in the state of non-combustion. A predetermined amount of combustion gas is supplied to the other burner in a state of combustion to cool the heat accumulator of the burner, and also the combustion gas is preheated by the heat released from the heat accumulator. The heating furnace 1 includes a combustion blower 31 that supplies the predetermined amount of combustion gas and also a non-combustion gas that does not produce a disturbance in the combustion to the burner 11A or 11B in a state of combustion, to thereby cool the heat accumulator of the burner in the state of combustion.
With the adoption of this construction, the present invention cools the heat accumulators 12A, 12B not only with a conventional predetermined amount of combustion gas but also with a non-combustion gas that does not contribute to combustion. Thus, amounts of heat released from the heat accumulators 12A, 12B are increased to prevent an excessive increase in temperature of the heat accumulators 12A, 12B. When the amounts of heat released from the heat accumulators 12A, 12B are increased, the heat accumulators 12A, 12B are allowed to accumulate amounts of heat corresponding to the amounts of the released heat. Therefore, it is possible to feed more combustion exhaust gas than ever before to the heat accumulators 12A, 12B. As a result, it is possible to reduce the amount of released escape gas. Furthermore, because the non-combustion gas does not contribute to combustion, the amount of produced combustion exhaust gas will not be increased so as to be equal to or more than the amount of supplied non-combustion gas.

The heating furnace 1 of the present embodiment further includes: an escape gas line 50 that exhausts the combustion exhaust gas which remains in the furnace without being taken in by the burner 11A or 11B in a state of non-combustion; a cooling/heat recovery unit 51 that cools the combustion exhaust gas exhausted from the escape gas line 50 and also recovers heat therefrom; and a non-combustion gas supply unit 60 that supplies the combustion exhaust gas after heat recovery to the combustion blower 31 as the non-combustion gas.
With the adoption of this construction, the present invention exhausts the combustion exhaust gas, which remains without being taken in by the burner 11A or 11 B in a state of non-combustion, to the outside of the furnace via the escape gas line 50 and later recovers heat from the combustion exhaust gas. The combustion exhaust gas at a lowered temperature is supplied to the combustion blower 31 as a non-combustion gas. As a result, amount of heat released from the heat accumulator is increased to prevent an excessive rise in temperature of the heat accumulator. Furthermore, with the circulation of the combustion exhaust gas, it is possible to reduce the production of nitrogen oxides (NO_{X}) in the system.

While a preferred embodiment of the present invention has been described with reference to the drawings, the present invention is not limited to the embodiment. Shapes, combinations and the like of the constituent members illustrated above are merely examples, and various modifications based on design requirements and the like can be made without departing from the scope of the present invention.

For example, in the aforementioned embodiment, the description has been for the case where a combustion exhaust gas is used as a non-combustion gas. However, the combustion exhaust gas is not limited to this.
For example, as a non-combustion gas, water vapor produced in the cooling/heat recovery unit 51 may be used. In the escape gas line 50, a boiler that cools the combustion exhaust gas exhausted from the exhaust line and also recovers heat from the combustion exhaust gas to produce water vapor may be provided instead of the cooling/heat recovery unit 51. With the boiler being provided, a non-combustion gas supply unit here (referred to as a second non-combustion gas supply unit) supplies at least either one of the combustion exhaust gas after heat recovery and the produced water vapor to the gas supply unit as the non-combustion gas.
With this construction, the combustion exhaust gas remaining without being taken in by the burner in a state or non-combustion is exhausted to the outside of the furnace via the exhaust line and is later subjected to heat recovery, to thereby produce water vapor. Subsequently, at least either one of the combustion exhaust gas at a lowered temperature and the produced water vapor is supplied to the gas supply unit as a non-combustion gas for cooling the heat accumulator. As a result, it is possible to increase amounts of heat released from the heat accumulators, to thereby prevent an excessive increase in temperature of the heat accumulators.
Furthermore, in addition to the aforementioned operational advantage, supply of water vapor makes it possible to suppress an abrupt combustion in the furnace, and hence, to suppress an amount of produced nitrogen oxides (NO_{X}). Furthermore, both of the combustion exhaust gas after heat recovery and the water vapor may be used as a non-combustion gas.

Even if an inert gas is used as a non-combustion gas, the operational advantage similar to that of the embodiment can be obtained. As an inert gas, for example an argon gas, a helium gas, a nitrogen gas, or the like may be used. In the case of using an inert gas as a non-combustion gas, there is a need to additionally prepare an inert gas and a non-combustion gas supply unit for supplying the inert gas (referred to as a third non-combustion gas supply unit). Therefore, in terms of costs, it is preferable that at least either one of the combustion exhaust gas and the water vapor be used as a gas produced in the aforementioned combustion process of the heating furnace 1, that is, a non-combustion gas.
With this construction, the heat accumulator is cooled not only by the conventional predetermined amount of combustion gas but also by an inert gas that does not contribute to combustion. As a result, it is possible to increase amounts of heat released from the heat accumulators, to thereby prevent an excessive increase in temperature of the heat accumulators.

### INDUSTRIAL APPLICABILITY

According to a combustion facility of heat accumulation type burners and a combustion method for heat accumulation type burners of the present invention, it is possible to reduce an amount of released escape gas, to thereby obtain high recovery efficiency of exhaust heat and achieve energy saving.

### DESCRIPTION OF THE REFERENCE SYMBOLS

1: heating furnace (combustion facility of heat accumulation type burners), 10: heat accumulation type burner, 11A, 11B: burner, 12A, 12B: heat accumulator, 31: combustion blower (gas supply unit), 50: escape gas line (exhaust line), 51: cooling/heat recovery unit (boiler), 60: non-combustion gas supply unit

## Claims

1. A combustion facility using heat accumulation type burners, comprising:
a furnace body: and
a pair of burners provided in the furnace body and each comprising a heat accumulator,
wherein while the pair of burners are caused to alternately combust in the furnace, a combustion exhaust gas in the furnace is taken in by a burner in a state of non-combustion to accumulate heat in a heat accumulator of the burner, and a predetermined amount of combustion gas is supplied to a burner in a state of combustion, so as to cool a heat accumulator of the burner and also preheats the combustion gas by heat released from the heat accumulator,
the combustion facility further comprising a gas supply unit that supplies a predetermined amount of combustion gas, and a non-combustion gas which does not produce a disturbance in combustion, to the burner in a state of combustion so as to cool the heat accumulator of the burner.

2. The combustion facility using heat accumulation type burners according to claim 1, further comprising:
an exhaust line that exhausts, to an outside of the furnace, a combustion exhaust gas remaining without being taken in by a burner in a state of non-combustion;
a cooling/heat recovery unit that cools the combustion exhaust gas exhausted from the exhaust line and also recovers heat from the combustion exhaust gas; and
a non-combustion gas supply unit that supplies the combustion exhaust gas after the heat recovery to the gas supply unit as the non-combustion gas.

3. The combustion facility using heat accumulation type burners according to claim 1, further comprising:
an exhaust line that exhausts, to an outside of the furnace, a combustion exhaust gas remaining without being taken in bya burner in a state of non-combustion;
a boiler that cools the combustion exhaust gas exhausted from the exhaust line and also recovers heat from the combustion exhaust gas, so as to produce water vapor; and
a second non-combustion gas supply unit that supplies at least either one of the combustion exhaust gas after the heat recovery and the produced water vapor to the gas supply unit as the non-combustion gas.

4. The combustion facility using the heat accumulation type burners according to any one of claims 1 to 3, further comprising:
a third non-combustion gas supply unit that supplies an inert gas to the gas supply unit as the non-combustion gas.

5. A combustion method for heat accumulation type burners, comprising:
a heat accumulation step in which, while a pair of burners each comprising a heat accumulator are caused to alternately combust in a furnace, the combustion exhaust gas in the furnace is taken in by a burner in a state of non-combustion to accumulate heat in a heat accumulator of the burner;
a combustion gas preheat step in which a predetermined amount of the combustion gas is supplied to a burner in a state of combustion, so as to cool a heat accumulator of the burner and also in which the combustion gas is preheated by heat released from the heat accumulator; and
a gas supply step in which the predetermined amount of combustion gas, and a non-combustion gas which does not produce a disturbance in combustion, are supplied to the burner in a state of combustion, so as to cool the heat accumulator of the burner.

6. The combustion method for heat accumulation type burners according to claim 5, further comprising:
an exhaust step in which a combustion exhaust gas remaining without being taken in by the burner in a state of non-combustion is exhausted to an outside of the furnace;
a cooling/heat recovery step in which the combustion exhaust gas exhausted in the exhaust step is cooled and is also subjected to heat recovery; and
a non-combustion gas supply step in which the combustion exhaust gas after the heat recovery is supplied to the gas supply step as the non-combustion gas.

7. The combustion method for heat accumulation type burners according to claim 5, further comprising:
an exhaust step in which a combustion exhaust gas remaining without being taken in by the burner in a state of non-combustion is exhausted to an outside of the furnace;
a cooling/heat recovery step in which the combustion exhaust gas exhausted in the exhaust step is cooled and is also subjected to heat recovery, so as to produce water vapor; and
a second non-combustion gas supply step in which at least either one of the combustion exhaust gas after the heat recovery and the produced water vapor is supplied to the gas supply step as the non-combustion gas.

8. The combustion method for heat accumulation type burners according to any one of claims 5 to 7, further comprising:
a third non-combustion gas supply step in which an inert gas is supplied to the gas supply unit as the non-combustion gas.
